# EUROPEAN PATENT APPLICATION

(11) **EP 3 461 797 A1**
(43) Date of publication of application: **03.04.2019**
(21) Application number: 18205938.6
(22) Date of filing: 09.07.2014
(51) Int. Cl.: C03B 23/023, C03B 29/08, B32B 17/06, C03B 25/08

(54) **METHOD FOR BENDING THIN GLASS**

(62) Divisional of application: 14744711.4
(71) Applicant: Corning Incorporated, Corning, New York 14831 (US)
(72) Inventor: JAIN, Anurag, Painted Post, NY New York 14870 (US); MOORE, Michael John, Corning, NY New York 14830 (US); SMITH, Larry Gene, Tulsa, OK Oklahoma 74112 (US); THOMAS, John Christopher, Elmira, NY New York 14905 (US); FREDHOLM, Michele Marie-Louise, 77870 Vulaines sur Seine (FR); POISSY, Stéphane, 91800 Brunoy (FR)
(74) Representative: Epping - Hermann - Fischer

(57) **Abstract**

A system and method for bending one or more thin glass structures. The system includes heating, bending and cooling zones, each having a plurality of modules aligned and connected to each other to define elongated tunnels, wherein adjacent heating modules are separated from each other by a furnace door. A conveyance mechanism carries the one or more thin glass structures through the modules via the elongated tunnels. Each of the modules include one or more heating elements, each heating element being independently controllable by element or set of elements as a function of a temperature profile for the one or more thin glass structures. The temperature profile can be determined as a function of temperature on the one or more thin glass structures.

## Description

### BACKGROUND

Lehrs for annealing and tempering of glass structures are generally known. For example, U.S. Patent No. 4,481,025 describes a conventional lehr for heat treating glass structures whereby the lehr is comprised of a series of modules which define an elongated insulated tunnel. A belt conveyor extends through the tunnel for moving glass structures from one end to the other. Duct work connections between the tunnel and ambient air, along with heaters and blowers can establish heating, tempering, and cooling zones within the lehr in the direction of conveyor movement.

Such conventional lehrs, however, cannot provide controlled heating and cooling of thin glass structures and glass laminate structures to prevent wrinkling thereof. Further, such conventional lehrs do not provide in situ bending or forming of thin glass structures and glass laminate structures followed by a controlled cooling thereof.

### SUMMARY

The present disclosure generally relates to a system and method for bending one or more sheets of thin glass. More specifically, the present disclosure provides a system and method for bending thin glass into complex shapes. Such a system and method can generally requires better and more flexible temperature control throughout the heating, bending and cooling processes. One exemplary embodiment provides higher controllable temperatures with differential heating within a specific heating module, controllable temperatures within a bending or pressing module, and heating features within cooling modules.

Embodiments of the present disclosure can thus provide variable glass viscosity in length and width of a respective glass structure or part (i.e., differential heating or delta temperatures along the lateral (transverse to the direction of movement) and longitudinal (direction of movement) dimensions of the part). This variable viscosity can be employed to manage any central tension in the respective glass structure versus any compressive stresses in the perimeter to ensure no edge wrinkling or improper bending of the preform shape occurs. To this end, an exemplary system can include a high number of radiant heating elements forming a plurality of zones (e.g., 200+ zones in predetermined patterns) whereby each heater or zone may have independent control and feedback mechanisms. Additionally, exemplary embodiments can include a plurality of heat profile recipes within each heating, bending and/or cooling zone to achieve an appropriate temperature profile for the respective glass structure(s).

Embodiments of the present disclosure can also provide a greater stress relaxation time to manage any central tension in the respective glass or laminate structure versus any compressive stresses in the perimeter thereof to ensure no edge wrinkling occurs during bending or pressing of the respective part(s). To this end, an exemplary system can include a plurality of multi-zone radiant preheating and bending modules, each having top and bottom heating elements and zones.

Embodiments of the present disclosure can further provide a full surface mold press for varying depth shapes (e.g., 10 mm to 25 mm shapes) to develop deep complex curvatures that cannot conventionally be generated with localized temperature gradients. Thus, an exemplary system can also include a press-assist module with a continuously varying ram speed (e.g., approaching 0.01 mm/sec or more).

Embodiments of the present disclosure can additionally provide precision thermal control during post-forming annealing or cooling as conventional high cooling rates and small variations in temperatures can cause micro-changes in the fictive temperature of the processed glass structure and can induce stress fields that cause wrinkling and subsequent optical distortions to a bent part or product. Thus, an exemplary system can include a post-bending section having multi-zone heating capability for a controlled cooling of the respective part or product.

Some embodiments of the present disclosure include a lehr for bending one or more thin glass structures (e.g., multiple sheets of glass in a stack or multiple glass structures in different molds). The lehr includes a heating zone having a plurality of heating modules aligned and connected to each other to define a first elongated tunnel, where adjacent heating modules are separated from each other by a furnace door. The lehr includes a bending zone subsequent the heating zone and having a plurality of bending modules aligned and connected to each other to define a second elongated tunnel, where adjacent bending modules are separated from each other by a furnace door. The lehr also includes a cooling zone subsequent the bending zone and having a plurality of cooling modules aligned and connected to each other to define a third elongated tunnel, where adjacent bending modules are separated from each other by a furnace door. A conveyance mechanism can also be included in the lehr for carrying one or more thin glass structures through the heating, bending and cooling modules via the first, second and third elongated tunnels. Each of the heating, bending and cooling modules include one or more heating elements, each heating element being independently controllable by element or set of elements as a function of a temperature profile for the one or more thin glass structures.

Further embodiments of the present disclosure include a method for bending one or more thin glass structures. The method includes providing a first temperature profile for one or more thin glass structures and assigning first set points to a first set of heating elements in ones of a plurality of modules in a lehr. The method also includes associating first power factors with each of the assigned heating elements in the first set and associating one or more control devices to each of the assigned heating elements in the first set. The method further includes controlling each of the heating elements in the first set as a function of the first temperature profile for the one or more thin glass structures.

### BRIEF DESCRIPTION OF THE DRAWINGS

Figures 1A-1C are pictorial illustrations of bent glass structures having different thicknesses.
Figure 2 is a series of deformation plots of bent glass structures showing modeled stresses in MPa.
Figure 3 is another deformation plot of a bent glass structure showing modeled stresses in MPa.
Figure 4 is a plot of deflection versus axis location for a roof panel of a vehicle.
Figure 5 is a simplified illustration of an exemplary lehr according to some embodiments of the present disclosure.
Figures 6A and 6B are illustrations of exemplary heating elements according to some embodiments of the present disclosure.
Figure 7 is a simplified depiction of an exemplary glass structure placed in a lehr according to some embodiments of the present disclosure.
Figure 8 is a graph of temperature versus time depicting an exemplary temperature profile according to some embodiments of the present disclosure.
Figure 9 is a simplified diagram of a press-assist module according to some embodiments of the present disclosure.
Figure 10 is a simplified block diagram of some embodiments of the present disclosure.

### DETAILED DESCRIPTION

With reference to the figures, where like elements have been given like numerical designations to facilitate an understanding of the present disclosure, the various embodiments for a system and method for bending thin glass are described.

The following description of the present disclosure is provided as an enabling teaching thereof and its best, currently-known embodiment. Those skilled in the art will recognize that many changes can be made to the embodiment described herein while still obtaining the beneficial results of the present disclosure. It will also be apparent that some of the desired benefits of the present disclosure can be obtained by selecting some of the features of the present disclosure without utilizing other features. Accordingly, those of ordinary skill in the art will recognize that many modifications and adaptations of the present disclosure are possible and can even be desirable in certain circumstances and are part of the present disclosure. Thus, the following description is provided as illustrative of the principles of the present disclosure and not in limitation thereof.

Thus, the description is not intended and should not be construed to be limited to the examples given but should be granted the full breadth of protection afforded by the appended claims and equivalents thereto. In addition, it is possible to use some of the features of the present disclosure without the corresponding use of other features. Accordingly, the foregoing description of exemplary or illustrative embodiments is provided for the purpose of illustrating the principles of the present disclosure and not in limitation thereof and can include modification thereto and permutations thereof.

Glass covers for devices with electronic displays or touch controls are increasingly being formed of thin glass that has been chemically strengthened using an ion exchange process, such as Gorilla@ Glass from Corning Incorporated. Automotive applications, e.g., windshields, side windows or lites, rear windows, sunroofs, etc., are also being formed of thin glass to meet emissions requirements. Such chemically strengthened glass can provide a thin, lightweight glass structure with an enhanced fracture and scratch resistance, as well as an enhanced optical performance. Ion exchangeable glasses typically have a relatively higher CTE than non-ion exchangeable glasses. Ion exchangeable glasses may, for example, have a high CTE in the order of 70 x10⁻⁷ C⁻¹ to 90x10⁻⁷ C⁻¹. Exemplary thin glass sheets according to embodiments of the present disclosure can have a thickness of up to about 1.5 mm, up to about 1 mm, up to about 0.7 mm, or in a range of from about 0.5 mm to about 1.5 mm, or from about 0.5 mm to about 0.7.

Assembly tolerances in the order of +/- 0.5 mm or less are often required to provide the desired quality look, feel, fit and finish for a specific application. Such tolerances are difficult to achieve when performing high temperature, localized, high precision bending of relatively high CTE or relatively large glass sheets or structures, e.g., a laminate structure having a dimension of over 1 m², of ion exchangeable glass. When heating a relatively large glass sheet or a relatively high CTE glass sheet to a temperature that softens the glass so that it can be bent or formed to the desired shape, the sheet of glass can expand by as much as 10 mm in one or more directions. This expansion of the glass creates challenges in maintaining high precision tolerances when heating and bending the glass sheet. After bending the ion exchangeable glass to the correct shape, the glass can be ion exchanged to provide the desired chemical strengthening or tempering of the glass sheet.

The present disclosure provides a solution for precision shaping of large glass sheets, particularly relatively large sheets of relatively high CTE glass, using a localized high temperature bending processes, and more particularly thin, relatively high CTE sheets. The term "thin" as used herein means a thickness of up to about 1.5 mm, up to about 1.0 mm, up to about 0.7 mm, or in a range of from about 0.5 mm to about 1.0 mm, or from about 0.5 mm to about 0.7 mm. The terms "sheet", "structure", "glass structures", "laminate structures" may be used interchangeably in the present disclosure and such use should not limit the scope of the claims appended herewith.

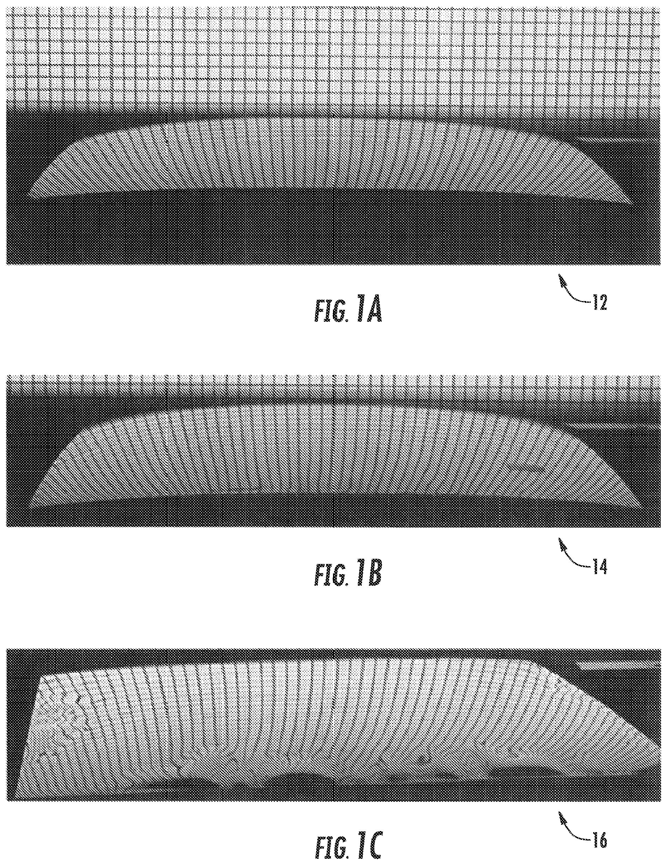

Applicant has discovered that bending thin glass is significantly different than bending conventional thicknesses of glass. For example, a 3.2 mm thick sheet of glass or glass laminate generally represents the lower end thickness of standard automotive tempered products. As illustrated in Figure 1A, a conventional bent glass structure 12 of soda lime glass having a 3.2 mm thickness generally presents an adequate bend as exhibited by the lack of optical distortions thereon. The glass structure 12 depicted in Figure 1A is illustrative of a Porsche 991 sunroof. Figures 1B and 1C, however, are illustrations of another bent structure 14 of soda line glass having a 1.6 mm thickness and a further bent structure 16 including at least one sheet of chemically strengthened glass, e.g., Gorilla® Glass, having a thickness of 0.7 mm. The glass structures 14, 16 depicted in Figures 1B and 1C are also illustrative of a Porsche 991 sunroof. As shown, each of the 1.6 mm and 0.7 mm thick glass structure 14, 16 exhibits wrinkling around the edges thereof as shown by the notable optical distortions.

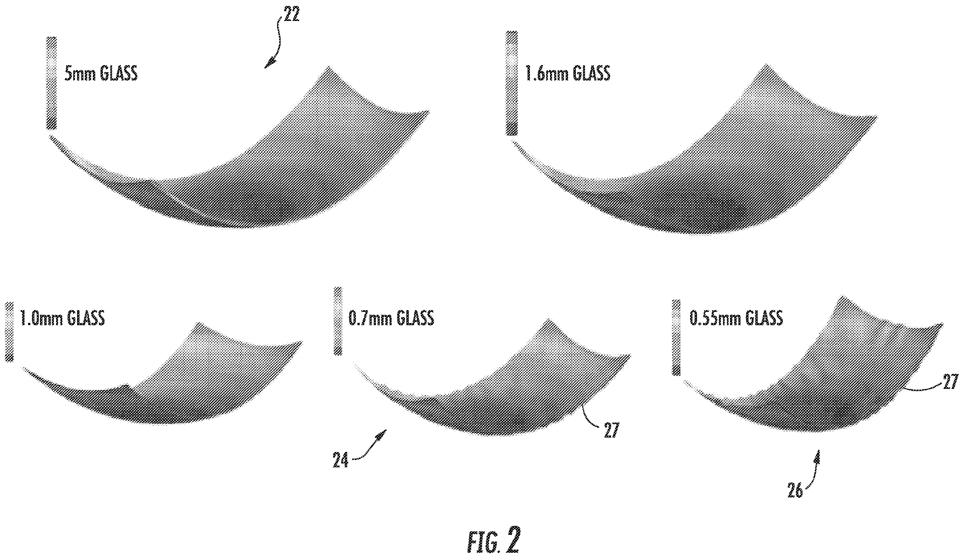

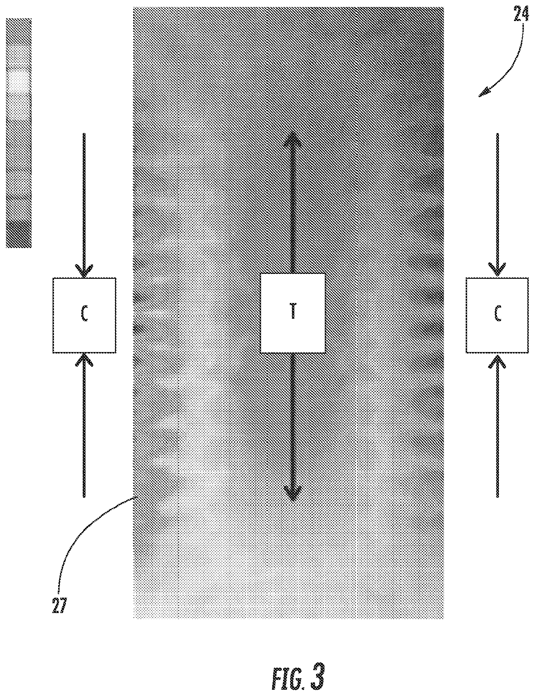

Figure 2 is a series of deformation plots of bent glass structures showing modeled stresses in MPa. As shown in Figure 2, the interior portions of the illustrated bent glass structures exhibit tension whereas the exterior portions thereof exhibit compressive stress. Thicker glass structures, such a 5 mm thick glass structure or laminate 22, do not exhibit unacceptable wrinkling; however, such is not the case with thin glass structures such as 0.7 mm thick glass structures or laminates 24 and 0.55 mm thick glass structures or laminates 26 which exhibit this unacceptable wrinkling. Applicant has discovered that this wrinkling 27 is due, in part, to the bending process of these glass structures which creates a strong membrane tension in the glass center with large compressive hoop stresses near the edges. The balancing of these tension and compressive stresses result in edge wrinkling in thin glass structures and laminates as exhibited in Figure 3. It has also been discovered that the degree of curvature of the glass or laminate structure (i.e., the complexity of the bent shape) adds to the degree of wrinkling thereof.

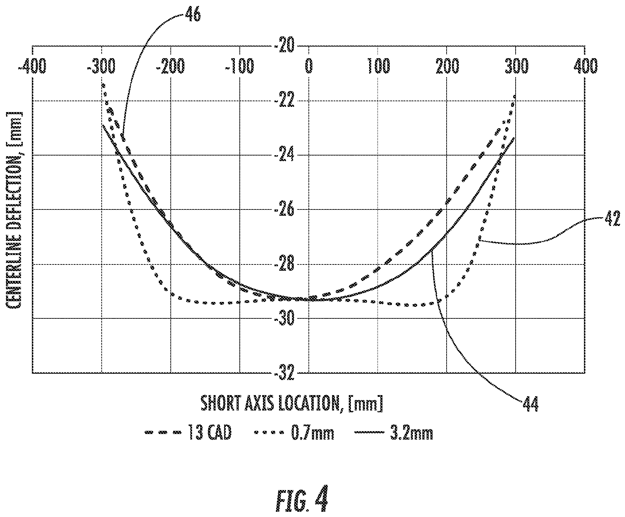

Figure 4 is a plot of deflection versus axis location for a roof panel of a vehicle. With reference to Figure 4, additional experiments and modeling suggest that thin glass structures and laminates exhibit a flat center region upon bending with steep edges whereas thicker glass structures and laminates do not exhibit this same behavior. For example, a center section of a BMW i3 roof panel was fabricated using a 0.7 mm thick glass structure 42 and a 3.2 mm thick glass structure 44. As shown in Figure 4, the 3.2 mm thick glass structure exhibited a bend substantially corresponding to a modeled BMW i3 panel bend 46 whereas, the 0.7 mm thick glass structure 42 exhibited a bend having a flat center region with steep edges. Such experimentation suggests a different heating and bending method is required for thin glass structures and laminates. Furthermore, it was also discovered that thicker glass structures and laminates were less susceptible to localized heating and cooling effects from tooling utilized during the bending process whereas thin glass structures and laminates demonstrated degradation in optics (e.g., optical distortions) and perimeter shapes with uneven and uncontrolled cooling, post bend. This is due, in part, to the uneven cooling of thin glass structures and laminates as such structures cool quickly and are substantially affected by the large thermal mass of a respective bending ring or other structure (mold, etc.) used in the bending process.

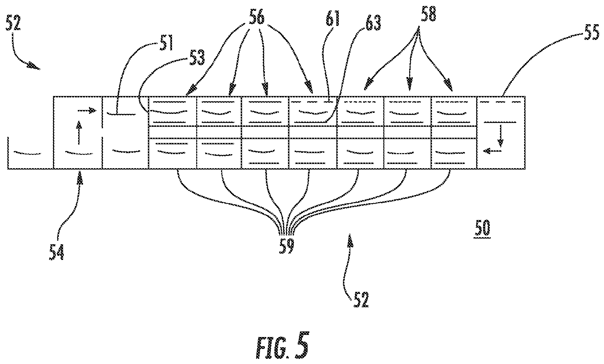

Figure 5 is a simplified illustration of an exemplary lehr according to some embodiments of the present disclosure. With reference to Figure 5, an exemplary lehr 50 can include a plurality of "wagons" or modules 52. In one embodiment, the lehr 50 can include eighteen modules 52. Of course, exemplary lehrs 50 can include more or less than eighteen modules 52 depending upon the size and/or thickness of a respective part or structure to be bent, the number of molds for the structure(s), and the number of glass parts or structures per mold. By way of a non-limiting example, multiple or single glass sheets can be provided in a single mold. Adjacent modules can be separated from each other by blast or furnace doors 53 or other suitable mechanisms. The lehr 50 can include a suitable feeding mechanism to feed a sheet of glass, multiple sheets of glass, a glass-glass laminate structure, or a glass-polymer laminate structure 51 into a loading lift module 54 whereby the structure 51 is conveyed into successive modules by a conveyance mechanism. Exemplary conveyance mechanisms include, but are not limited to, transfer rolls, conveyance carriages, and other suitable carts or carriages in the industry. In some embodiments, a conveyance mechanism can include suitable substrate or sheet registration mechanisms such as, but not limited to, the registration mechanisms described in pending U.S. Application No. 13/303,685, the entirety of which is incorporated herein by reference. In one embodiment, the glass or laminate structure 51 can be conveyed from the loading lift module 54 into one or more preheating or heating modules 56. In the embodiment depicted in Figure 5, a series of four or more heating modules 56 can be provided to advance or increase the temperature of the glass or laminate structure 51 to a desired temperature or to meet a desired temperature profile. Of course, any number of heating modules 56 are envisioned in embodiments of the present disclosure and such a depiction should not so limit the scope of the claims appended herewi th.

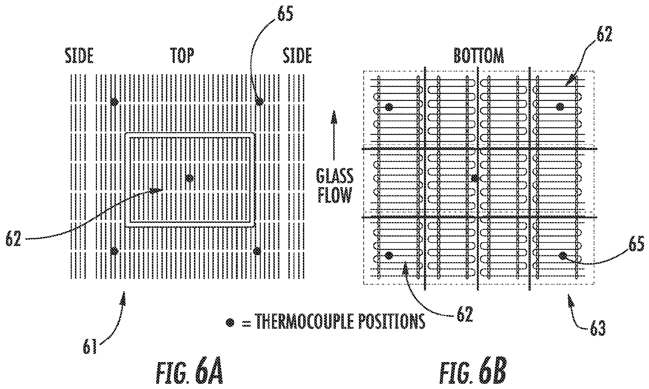

Figures 6A and 6B are illustrations of exemplary heating elements according to some embodiments of the present disclosure. With reference to Figures 6A and 6B and with continued reference to Figure 5, any one or several of the modules 52 in an exemplary lehr 50 can include a top set of heating elements 61 and/or a bottom set of heating elements 63 in a respective module 52. These heating elements 61, 63 can be arranged to form heating and/or cooling zones 62 any of which can be independently controllable. Of course, the number of zones depicted in Figures 6A and 6B is exemplary only and should not limit the scope of the claims appended herewith as additional heating/cooling zones can be provided in any of the modules 52. Exemplary heating elements can be, but are not limited to, electrically conductive ceramic materials (e.g., silicon carbide, disilicide molybdenum, titanium diboride, etc.) generally shaped as straight or curved tubes which can be employed to dissipate power via heat radiation into a furnace environment, e.g., a module 52 of an exemplary lehr. In one embodiment, exemplary heating elements can be those described in U.S. Application No. 13/302,586, the entirety of which is incorporated herein by reference.

While not shown in Figure 5, each set of heating elements 61, 63 can include a plurality of thermocouples and/or pyrometers 65 provided at predetermined positions in the module to allow proper monitoring and control of each element or set of elements or zones. The thermocouples/pyrometers 65 are adaptable to send signals to the control system to regulate the exact temperature control within a respective module 52 through the starting and stopping of any individual or set(s) of heating elements 61, 63 in a respective module 52 thereby controlling the heating and cooling of a glass sheet or laminate structure in a respective module 52. In another embodiment of the present disclosure, shielding material (not shown) such as, but not limited to, aluminosilicate refractory fibers or another suitable insulative material, can be utilized to assist in the heating and cooling of a respective glass sheet or laminate structure within a module(s) 52. For example, it was discovered that many complex bent, thin glass part shapes for automotive or other applications required a level of differential heating that cannot be fully achieved with furnace heating control alone. Thus, in such cases, a combination of differential heating element control with appropriate shielding materials/panels (dynamic or static) can be employed. Exemplary static shielding can be employed directly on a respective glass sheet or laminate structure or can be a function of the carrying mold or conveyance mechanism. Exemplary dynamic shielding can be employed and controlled utilizing an exemplary movable shielding mechanism within a respective module 52 that is controlled using an exemplary control system. After an exemplary glass or laminate structure 51 has been elevated to a desired temperature, the glass or laminate structure 51 can be conveyed from the series of heating modules 56 to one or more bending modules 58 whereby the glass or laminate structure 51 can be bent to a desired shape. Exemplary bending modules 58 can also include top and bottom heating elements 61, 63 to maintain and/or control the temperature of the glass or laminate structure 51 contained within the respective bending module 58.

Upon obtaining a desired shape, the glass or laminate structure 51 can then be provided to an additional lift module 55 whereby the glass or laminate structure 51 is conveyed to one or more successive cooling modules 59. The additional lift module 55 can include top and bottom heating elements 61, 63 and respective thermocouples/pyrometers 65 to maintain and/or control the temperature of the bent glass or laminate structure 51 contained therein. Exemplary cooling modules 59 can also include top and/or bottom heating elements 61, 63 and respective thermocouples/pyrometers 65 to provide a controlled cooling of the temperature of the bent glass or laminate structure 51 contained therein. It should be noted that the exact temperature control within any of the lift module 55 and cooling modules 59 can, like the heating modules 56, bending modules 58, etc., be regulated through the starting and stopping of any individual or set(s) of heating elements 61, 63 in a respective module to thereby control the heating and cooling of a bent glass sheet or laminate structure in a respective module. In another embodiment of the present disclosure, shielding (not shown) can be utilized to assist in the heating and cooling of a respective glass sheet or laminate structure within the module(s). Upon being cooled to a predetermined temperature, the bent glass or laminate structure 51 can then exit the series of cooling modules 59 into the loading module 54. While the embodiment depicted in Figure 5 is illustrated as a stacked lehr embodiment (e.g., heating features and cooling features stacked upon each other along with lift modules), the claims appended herewith should not be so limited as an exemplary lehr can be substantially linear in form, that is, an exemplary glass or laminate structure to be bent is not conveyed vertically by a lift module but is only conveyed horizontally along a series of heating, bending and cooling modules.

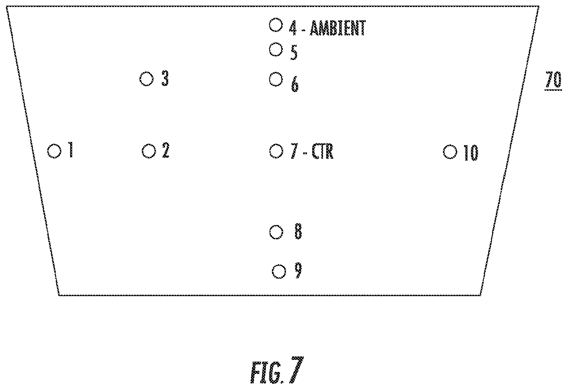

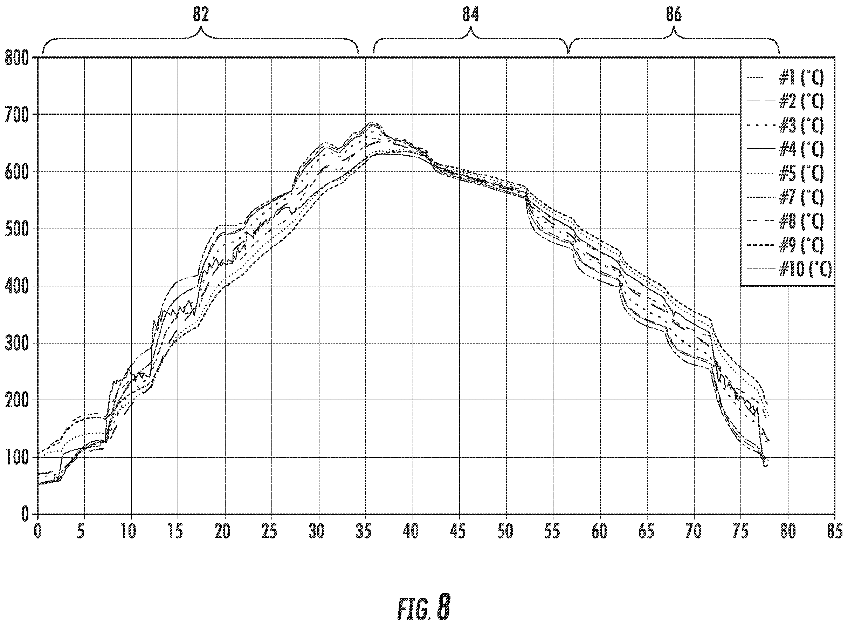

Figure 7 is a simplified depiction of an exemplary glass structure placed in a lehr according to some embodiments of the present disclosure. Figure 8 is a graph of temperature in Celsius versus time in minutes depicting an exemplary temperature profile according to some embodiments of the present disclosure. With reference to Figures 7 and 8, in one experiment, ten thermocouples/pyrometers 72 were positioned on a thin glass sheet or laminate structure 70 to determine an appropriate temperature profile for heating, bending and cooling the thin glass sheet or laminate structure within an exemplary lehr. Each of these thermocouples/pyrometers 72 are numbered 1-10. Over successive experiments, an exemplary temperature profile 80 was obtained as illustrated in Figure 8. Of course, such a temperature profile is exemplary only and the claims appended herewith should not be so limited. For example, additional temperature profiles can be modeled and/or generated depending upon the thickness thereof, the number of and/or types of layers in a respective laminate structure, etc. In one embodiment of the present disclosure, control of each, any number of, or all of the heating elements in the heating, bending and/or cooling modules can be performed as a function of an exemplary temperature profile. Exemplary embodiments of the present disclosure provide active heating in the pre-heating zones 82 of an exemplary lehr 50 (e.g., one or more heating modules) to thereby provide appropriate stress relaxation in the respective glass or laminate structure. By providing exemplary heating elements in these pre-heating zones versus a conventional passive blanket heat, thin glass or laminate structures can be heated faster and can be utilized to form glass or laminate structures over a longer time period to thereby relieve stresses as they build.

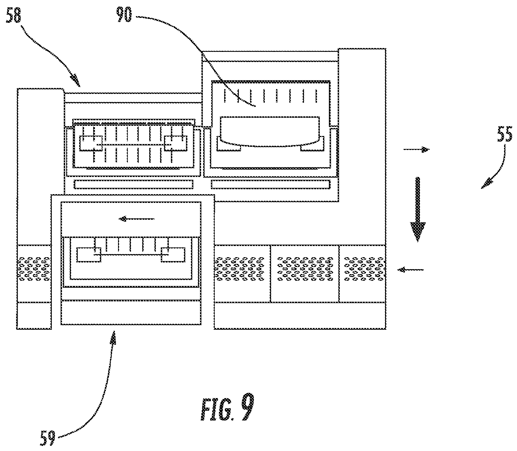

With continued reference to Figures 5 and 8, to locally bend or form a thin glass or laminate structure into a desired shape, the structure can be supported on a frame or mold in an exemplary bending module 58. The glass or laminate structure can then be allowed to sag, e.g., deform to the shape of the mold under its own weight while the structure is held in an appropriate temperature range 84. In another embodiment, a force or press-assist mechanism 90 as illustrated in Figure 9 can be applied to the glass or laminate structure to aid in the deformation thereof and/or to assist deformation of the structure to difficult shapes and bend tolerances, e.g., for automotive windshields, sunroofs and other applications. Further, embodiments of the present disclosure can further provide a full surface mold press for varying depth shapes (e.g., 10 mm to 25 mm shapes) to develop deep complex curvatures that cannot conventionally be generated with localized temperature gradients. An exemplary press-assist module or mechanism 90 can also include a continuously varying ram speed (e.g., approaching 0.01 mm/sec or more) to assist in shaping such complex curvatures. Such an exemplary press-assist mechanism 90 or module can be provided between one bending module 58 and an exemplary lift module, and the capacity of an exemplary lehr 50 can be a function of the size of a respective part or structure, number of molds and/or modules, and the number of glass panes or structures per mold.

Exemplary embodiments of the present disclosure can also provide a controlled cooling of glass or laminate structures 51 in exemplary cooling modules 59. For example, in some embodiments active heating can occur in one or more early cooling modules 59 of an exemplary lehr 50 (e.g., one or more heating modules) to thereby permit management of any thermal mass differences between the thin glass or laminate structure and the respective bending ring or mold upon which the structure rests. By providing exemplary heating elements in one or more cooling zones 86 of a temperature profile versus a conventional passive blanket heat, thin glass or laminate structures can be controllably cooled to thereby permit thermal management of the respective structure.

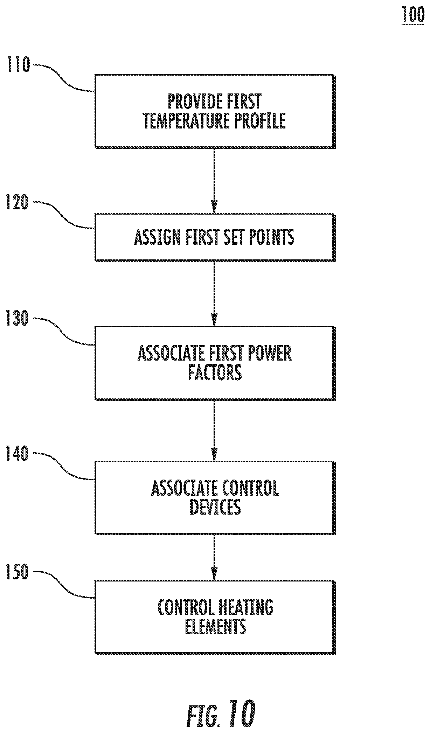

In some embodiments of the present disclosure, thermocouples/pyrometers in an exemplary lehr provide temperature information to an exemplary control system to maintain an appropriate temperature profile (e.g., Figure 8) in a respective wagon or module and hence for the respective glass or laminate structure. For example, an exemplary lehr can include a high number of radiant heating elements forming a plurality of zones in a respective lehr (e.g., 200+ zones in predetermined patterns using both top and/or bottom heating elements in a module). Each heating element, set of elements and/or zones can have independent control and feedback mechanisms. For example, a programmable logic controller (PLC) can receive temperature information from a thermocouple and adjust the on/off state or power factor of heating elements in a respective module to obtain a specific temperature or profile (i.e., rate of decrease or increase in temperature). Figure 10 is a simplified block diagram of one embodiment of the present disclosure. With reference to Figure 10, an exemplary method 100 of bending a thin glass structure in a lehr is provided. At step 110, a temperature profile (see, e.g., Figure 8) is provided for a glass structure in a module. In some embodiments, the temperature profile is a function of the size of the respective part or structure to be bent, the number of molds, and the number of glass structures per mold. As a function of this temperature profile, temperature set points are assigned to individual or groups of heating elements (top and/or bottom) in a respective module, plural modules or each module of an exemplary lehr at step 120. Power factors or levels are then associated with each of these assigned individual or groups of heating elements at step 130. One or more control devices (e.g., thermocouples, pyrometers, and the like) are set or associated to one or more assigned individual or groups of heating elements at step 140 to control at step 150 each element individually or in sets to thereby ultimately control the temperature of a glass structure(s) in the lehr to substantially conform to the selected temperature profile. This series of steps can generally be termed as a heat profile recipe.

In alternative embodiments of the present disclosure, a lehr can be provided with a plurality of heat profile recipes. That is, within each module or within a zone (e.g., heating, bending, cooling zone including one or more modules) an exemplary control system can call up a predetermined temperature profile and apply additional heat profile recipes to any number or sets of heating elements within the respective module or zone. Thus, in one embodiment a plurality of heat profile recipes can be utilized in a bending zone (e.g., one or more bending modules) to achieve an appropriate temperature profile for the glass or laminate structure(s) to be bent. In such a recipe, any number of or sets of heating elements can be independently controlled to provide appropriate softening of the glass or laminate structure to achieve a proper bend (in the case of a bending zone), to achieve a proper rate or profile of heating or cooling (in the cases of heating or cooling zones, respectively). For example, a first set or number of heating elements in a module of a heating zone can achieve a first temperature setpoint. Upon reaching this setpoint (e.g., signals provided by thermocouples/pyrometers in the lehr to a PLC), a processor or controller in the control system (e.g., a PLC or the like) can initiate a second recipe in response to commands by an operator or from a software program embodied on a computer readable medium by turning on different heating elements and/or modifying the power thereto in the module to properly match an overall temperature profile for the respective structure(s).

As noted above portions of the present disclosure can be implemented by a general purpose computer programmed in accordance with the principals discussed herein. It can be emphasized that the above-described embodiments, particularly any "preferred" or exemplary embodiments, are merely possible examples of implementations, merely set forth for a clear understanding of the principles of the present disclosure.

Embodiments of the subject matter and the functional operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer program products, i.e., one or more modules of computer program instructions encoded on a tangible program carrier for execution by, or to control the operation of, data processing apparatus. The tangible program carrier can be a computer readable medium. The computer readable medium can be a machine-readable storage device, a machine readable storage substrate, a memory device, or a combination of one or more of them.

The term "processor" or "controller" can encompass all apparatus, devices, and machines for processing data, including by way of example a programmable processor, a computer, or multiple processors or computers. The processor can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, or declarative or procedural languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more data memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), to name just a few.

Computer readable media suitable for storing computer program instructions and data include all forms data memory including nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, input from the user can be received in any form, including acoustic, speech, or tactile input.

Embodiments of the subject matter described herein can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described herein, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Thus, embodiments of the present disclosure can provide a combined system of hardware and software having a focus on overcoming the challenges associated with thin glass bending into complex shapes, e.g., various levels of differential heating can be achieved with the glass or laminate structures in embodiments of the present disclosure, stress relaxation can be achieved in a structure during the bending process, a gravity sag bending process can be utilized with a press-assist mechanism for more complex shapes and tighter tolerances, and a tightly controlled cooling process can be achieved with active heating as a part of the cooling process.

Embodiments of the present disclosure can thus provide variable glass viscosity in length and width of a respective part (i.e., differential heating or delta temperatures along the lateral (transverse to the direction of movement) and longitudinal (direction of movement) dimensions of the part). This variable viscosity can be employed to manage any central tension in the respective glass structure versus any compressive stresses in the perimeter to ensure no edge wrinkling or improper bending of the preform shape occurs. To this end, an exemplary system can include a high number of radiant heating elements forming a plurality of zones (e.g., 200+ zones in predetermined patterns, top and/or bottom) each heater or zone having independent control and feedback mechanisms. Additionally, exemplary embodiments can include a plurality of heat profile recipes within each heating, bending and/or cooling zone to achieve an appropriate temperature profile for the respective part(s).

Embodiments of the present disclosure can also provide a greater stress relaxation time to manage any central tension in the respective glass structure versus any compressive stresses in the perimeter thereof to ensure no edge wrinkling occurs during bending or pressing of the respective part(s). To this end, an exemplary system can include a plurality of multi-zone radiant preheating and bending modules, each having top and bottom heating elements and zones. Embodiments of the present disclosure can further provide a full surface mold press for varying depth shapes (e.g., 10 mm to 25 mm shapes) to develop deep complex curvatures that cannot conventionally be generated with localized temperature gradients. Thus, an exemplary system can also include a press-assist module with a continuously varying ram speed approaching (e.g., 0.01 mm/sec or the like).

Embodiments of the present disclosure can additionally provide precision thermal control during post-forming annealing or cooling as conventional high cooling rates and any small variations in temperatures can cause micro-changes in the fictive temperature of the processed glass structure and induce stress fields that cause wrinkling and subsequent optical distortions to a bent part or product. Thus, an exemplary system can include a post-bending section having multi-zone heating capability for a controlled cooling of the respective part or product.

In one exemplary embodiment, a lehr for bending one or more thin glass structures is provided. Exemplary one or more thin glass structures can have a thickness of up to about 1.5 mm, up to about 1.0 mm, up to about 0.7 mm, or in a range of from about 0.5 mm to about 1.0 mm, or from about 0.5 mm to about 0.7 mm. Of course, the one or more thin glass structures can also be a laminate structure. The lehr can include a heating zone having a plurality of heating modules aligned and connected to each other to define a first elongated tunnel, wherein adjacent heating modules are separated from each other by a furnace door. Each of the heating modules can further comprise a first plurality of heating elements in an upper portion of the heating module and a second plurality of heating elements in a lower portion of the heating module, each of the first and second plurality of heating elements being independently controllable by element or set of elements as a function of the temperature profile. The lehr also includes a bending zone subsequent the heating zone and having a plurality of bending modules aligned and connected to each other to define a second elongated tunnel, wherein adjacent bending modules are separated from each other by a furnace door. Each of the bending modules further comprise a first plurality of heating elements in an upper portion of the bending module and a second plurality of heating elements in a lower portion of the bending module, each of the first and second plurality of heating elements being independently controllable by element or set of elements as a function of the temperature profile. The lehr further includes a cooling zone subsequent the bending zone and having a plurality of cooling modules aligned and connected to each other to define a third elongated tunnel, wherein adjacent bending modules are separated from each other by a furnace door. Each of the cooling modules further comprise a plurality of heating elements in an upper or lower portion of the cooling module, each of the plurality of heating elements being independently controllable by element or set of elements as a function of the temperature profile. A conveyance mechanism can be used for carrying one or more thin glass structures through the heating, bending and cooling modules via the first, second and third elongated tunnels whereby each of the heating, bending and cooling modules include one or more heating elements, each heating element being independently controllable by element or set of elements as a function of a temperature profile for the one or more thin glass structures. Exemplary heating elements can be formed from electrically conductive materials such as, but not limited to, silicon carbide, disilicide molybdenum, titanium diboride, and combinations thereof.

In one embodiment, the temperature profile can be determined as a function of a value such as, but not limited to, size of the one or more thin glass structures, thickness of the one or more thin glass structures, size and thickness of the one or more thin glass structures, number of molds for the one or more thin glass structures, number of one or more thin glass structures per mold, and combinations thereof. The lehr can include a press-assist module having a press ram to provide a varying ram speed to shape the one or more thin glass structures. The lehr can also include insulative shielding to assist in bending the one or more thin glass structures. In one embodiment, the first, second and third elongated tunnels are connected end to end. In another embodiment, the modules in the heating zone are vertically adjacent to the modules in the cooling zone and wherein the first and third elongated tunnels are substantially parallel to each other with the one or more thin glass structures being conveyed in a first direction in the first elongated tunnel and in a second direction in the third elongated tunnels. In a further embodiment, the lehr further includes one or more lift modules to vertically lift the one or more thin glass structures to the first elongated tunnel and vertically lower the one or more thin glass structures to the third elongated tunnel.

In another exemplary embodiment, a method is provided for bending one or more thin glass structures. Exemplary one or more thin glass structures can have a thickness of up to about 1.5 mm, up to about 1.0 mm, up to about 0.7 mm, or in a range of from about 0.5 mm to about 1.0 mm, or from about 0.5 mm to about 0.7 mm. Of course, the one or more thin glass structures can also be a laminate structure. The method can include providing a first temperature profile for one or more thin glass structures, assigning first set points to a first set of heating elements in ones of a plurality of modules in a lehr, and associating first power factors with each of the assigned heating elements in the first set. The method can also include associating one or more control devices (e.g., thermocouples, pyrometers, or the like) to each of the assigned heating elements in the first set and controlling each of the heating elements in the first set as a function of the first temperature profile for the one or more thin glass structures. In one embodiment, the first temperature profile can be determined as a function of a value such as, but not limited to, size of the one or more thin glass structures, thickness of the one or more thin glass structures, size and thickness of the one or more thin glass structures, number of molds for the one or more thin glass structures, number of one or more thin glass structures per mold, and combinations thereof. This first temperature profile can be determined as a function of temperatures on the one or more thin glass structures.

In some embodiments, the method includes the step of bending the one or more thin glass structures. In another embodiment, the step of bending further includes deforming the one or more thin glass structures under its respective weight while the one or more thin glass structures are held in a predetermined temperature range of the first temperature profile. In an additional embodiment, the method includes the step of deforming the one or more thin glass structures by a press mechanism. In a further embodiment, ones of the plurality of modules further comprise a first plurality of heating elements in an upper portion of the module and a second plurality of heating elements in a lower portion of the module, each of the first and second plurality of heating elements being independently controllable by element or set of elements as a function of the first temperature profile.

In another embodiment, the method includes the steps of providing a second temperature profile for the one or more thin glass structures, assigning second set points to a second set of heating elements in ones of the plurality of modules in the lehr, associating second power factors with each of the assigned heating elements in the second set, associating one or more control devices to each of the assigned heating elements in the second set, and controlling each of the heating elements in the second set as a function of the second temperature profile for the one or more thin glass structures. This second temperature profile can also be determined as a function of temperatures on the one or more thin glass structures. In one embodiment, the second set of heating elements is mutually exclusive of the first set. In another embodiment, the first and second sets of heating elements are located in heating, bending and/or cooling modules. In yet a further embodiment, ones of the plurality of modules further comprise a first plurality of heating elements in an upper portion of the module and a second plurality of heating elements in a lower portion of the module, each of the first and second plurality of heating elements being independently controllable by element or set of elements as a function of the first temperature profile and second temperature profile.

While this description can include many specifics, these should not be construed as limitations on the scope thereof, but rather as descriptions of features that can be specific to particular embodiments. Certain features that have been heretofore described in the context of separate embodiments can also be implemented in combination in a single embodiment. Conversely, various features that are described in the context of a single embodiment can also be implemented in multiple embodiments separately or in any suitable subcombination. Moreover, although features can be described above as acting in certain combinations and can even be initially claimed as such, one or more features from a claimed combination can in some cases be excised from the combination, and the claimed combination can be directed to a subcombination or variation of a subcombination.

Similarly, while operations are depicted in the drawings or figures in a particular order, this should not be understood as requiring that such operations be performed in the particular order shown or in sequential order, or that all illustrated operations be performed, to achieve desirable results. In certain circumstances, multitasking and parallel processing can be advantageous.

As shown by the various configurations and embodiments illustrated in Figures 1-10, various embodiments for a system and method for bending thin glass have been described.

In the following, examples of a lehr and method for bending one or more thin glass structures are described:
1. A lehr for bending one or more thin glass structures comprising:
   a heating zone having a plurality of heating modules aligned and connected to each other to define a first elongated tunnel, wherein adjacent heating modules are separated from each other by a furnace door;
   a bending zone subsequent the heating zone and having a plurality of bending modules aligned and connected to each other to define a second elongated tunnel, wherein adjacent bending modules are separated from each other by a furnace door;
   a cooling zone subsequent the bending zone and having a plurality of cooling modules aligned and connected to each other to define a third elongated tunnel, wherein adjacent bending modules are separated from each other by a furnace door; and
   a conveyance mechanism for carrying one or more thin glass structures through the heating, bending and cooling modules via the first, second and third elongated tunnels,
   wherein each of the heating, bending and cooling modules include one or more heating elements, each heating element being independently controllable by element or set of elements as a function of a temperature profile for the one or more thin glass structures.
2. The lehr of Example 1 wherein the one or more thin glass structures has a thickness of up to about 1.5 mm, up to about 1.0 mm, up to about 0.7 mm, or in a range of from about 0.5 mm to about 1.0 mm, or from about 0.5 mm to about 0.7 mm.
3. The lehr of Example 1 wherein the temperature profile is determined as a function of a value selected from the group consisting of size of the one or more thin glass structures, thickness of the one or more thin glass structures, size and thickness of the one or more thin glass structures, number of molds for the one or more thin glass structures, number of one or more thin glass structures per mold, and combinations thereof.
4. The lehr of Example 1 wherein the one or more thin glass structures is a glass-glass laminate structure or a glass-polymer laminate structure.
5. The lehr of Example 1 wherein each of the heating modules further comprise a first plurality of heating elements in an upper portion of the heating module and a second plurality of heating elements in a lower portion of the heating module, each of the first and second plurality of heating elements being independently controllable by element or set of elements as a function of the temperature profile.
6. The lehr of Example 1 wherein each of the bending modules further comprise a first plurality of heating elements in an upper portion of the bending module and a second plurality of heating elements in a lower portion of the bending module, each of the first and second plurality of heating elements being independently controllable by element or set of elements as a function of the temperature profile.
7. The lehr of Example 1 wherein each of the cooling modules further comprise a plurality of heating elements in an upper or lower portion of the cooling module, each of the plurality of heating elements being independently controllable by element or set of elements as a function of the temperature profile.
8. The lehr of Example 1 further comprising a press-assist module having a press ram to provide a varying ram speed to shape the one or more thin glass structures.
9. The lehr of Example 1 wherein the one or more heating elements are formed from electrically conductive materials selected from the group consisting of silicon carbide, disilicide molybdenum, titanium diboride, and combinations thereof.
10. The lehr of Example 1 further comprising insulative shielding to assist in bending the one or more thin glass structures.
11. The lehr of Example 1 wherein the first, second and third elongated tunnels are connected end to end.
12. The lehr of Example 1 wherein the modules in the heating zone are vertically adjacent to the modules in the cooling zone and wherein the first and third elongated tunnels are substantially parallel to each other with the one or more thin glass structures being conveyed in a first direction in the first elongated tunnel and in a second direction in the third elongated tunnels.
13. The lehr of Example 12 further comprising one or more lift modules to vertically lift the one or more thin glass structures to the first elongated tunnel and vertically lower the one or more thin glass structures to the third elongated tunnel.
14. A method for bending one or more thin glass structures comprising the steps of:
   providing a first temperature profile for one or more thin glass structures;
   assigning first set points to a first set of heating elements in ones of a plurality of modules in a lehr;
   associating first power factors with each of the assigned heating elements in the first set;
   associating one or more control devices to each of the assigned heating elements in the first set; and
   controlling each of the heating elements in the first set as a function of the first temperature profile for the one or more thin glass structures.
15. The method of Example 14 wherein the one or more thin glass structures has a thickness of up to about 1.5 mm, up to about 1.0 mm, up to about 0.7 mm, or in a range of from about 0.5 mm to about 1.0 mm, or from about 0.5 mm to about 0.7 mm.
16. The method of Example 14 wherein the temperature profile is determined as a function of a value selected from the group consisting of size of the one or more thin glass structures, thickness of the one or more thin glass structures, size and thickness of the one or more thin glass structures, number of molds for the one or more thin glass structures, number of one or more thin glass structures per mold, and combinations thereof.
17. The method of Example 14 wherein the one or more thin glass structures is a glass-glass laminate structure or a glass-polymer laminate structure.
18. The method of Example 14 further comprising the step of bending the one or more thin glass structures.
19. The method of Example 18 wherein the step of bending further comprises deforming the one or more thin glass structures under its respective weight while the one or more thin glass structures are held in a predetermined temperature range of the first temperature profile.
20. The method of Example 19 further comprising the step of deforming the one or more thin glass structures by a press mechanism.
21. The method of Example 14 wherein the first temperature profile is determined as a function of temperatures on the one or more thin glass structures.
22. The method of Example 14 wherein the control devices are thermocouples, pyrometers, or combinations thereof.
23. The method of Example 14 further comprising the steps of:
   providing a second temperature profile for the one or more thin glass structures;
   assigning second set points to a second set of heating elements in ones of the plurality of modules in the lehr;
   associating second power factors with each of the assigned heating elements in the second set;
   associating one or more control devices to each of the assigned heating elements in the second set; and
   controlling each of the heating elements in the second set as a function of the second temperature profile for the one or more thin glass structures.
24. The method of Example 23 wherein the second temperature profile is determined as a function of temperatures on the one or more thin glass structures.
25. The method of Example 23 wherein the second set of heating elements is mutually exclusive of the first set.
26. The method of Example 23 wherein the first and second set of heating elements are located in modules selected from the group consisting of a heating module, a bending module, a cooling module, and combinations thereof.
27. The method of Example 14 wherein ones of the plurality of modules further comprise a first plurality of heating elements in an upper portion of the module and a second plurality of heating elements in a lower portion of the module, each of the first and second plurality of heating elements being independently controllable by element or set of elements as a function of the first temperature profile.

## Claims

1. A method for bending one or more thin glass structures comprising the steps of:
providing a first temperature profile for one or more thin glass structures;
assigning first set points to a first set of heating elements in ones of a plurality of modules in a lehr;
associating first power factors with each of the assigned heating elements in the first set;
associating one or more control devices to each of the assigned heating elements in the first set; and
controlling each of the heating elements in the first set as a function of the first temperature profile for the one or more thin glass structures.

2. The method of Claim 1 wherein the one or more thin glass structures has a thickness of up to about 1.5 mm, up to about 1.0 mm, up to about 0.7 mm, or in a range of from about 0.5 mm to about 1.0 mm, or from about 0.5 mm to about 0.7 mm.

3. The method of Claim 1 wherein the temperature profile is determined as a function of a value selected from the group consisting of size of the one or more thin glass structures, thickness of the one or more thin glass structures, size and thickness of the one or more thin glass structures, number of molds for the one or more thin glass structures, number of one or more thin glass structures per mold, and combinations thereof.

4. The method of Claim 1 wherein the one or more thin glass structures is a glass-glass laminate structure or a glass-polymer laminate structure.

5. The method of Claim 1 further comprising the step of bending the one or more thin glass structures.

6. The method of Claim 5 wherein the step of bending further comprises deforming the one or more thin glass structures under its respective weight while the one or more thin glass structures are held in a predetermined temperature range of the first temperature profile.

7. The method of Claim 6 further comprising the step of deforming the one or more thin glass structures by a press mechanism.

8. The method of Claim 1 wherein the first temperature profile is determined as a function of temperatures on the one or more thin glass structures.

9. The method of Claim 1 wherein the control devices are thermocouples, pyrometers, or combinations thereof.

10. The method of Claim 1 further comprising the steps of:
providing a second temperature profile for the one or more thin glass structures;
assigning second set points to a second set of heating elements in ones of the plurality of modules in the lehr;
associating second power factors with each of the assigned heating elements in the second set;
associating one or more control devices to each of the assigned heating elements in the second set; and
controlling each of the heating elements in the second set as a function of the second temperature profile for the one or more thin glass structures.

11. The method of Claim 10 wherein the second temperature profile is determined as a function of temperatures on the one or more thin glass structures.

12. The method of Claim 10 wherein the second set of heating elements is mutually exclusive of the first set.

13. The method of Claim 10 wherein the first and second set of heating elements are located in modules selected from the group consisting of a heating module, a bending module, a cooling module, and combinations thereof.

14. The method of Claim 1 wherein ones of the plurality of modules further comprise a first plurality of heating elements in an upper portion of the module and a second plurality of heating elements in a lower portion of the module, each of the first and second plurality of heating elements being independently controllable by element or set of elements as a function of the first temperature profile.
